# EUROPEAN PATENT APPLICATION

(11) **EP 3 680 833 A1**
(43) Date of publication of application: **15.07.2020**
(21) Application number: 19150710.2
(22) Date of filing: 08.01.2019
(51) Int. Cl.: G06Q 10/06, G06Q 50/08, E01C 19/48

(54) **A SYSTEM AND METHOD FOR ASSISTING IN IMPROVING A PAVING JOB**

(71) Applicant: TF-Technologies A/S, 3480 Fredensborg (DK)
(72) Inventor: Melchior, Lisbeth Teilmann, 3480 Fredensborg (DK); Kristiansen, Søren, 2860 Søborg (DK); Larsen, Frank Robert, 2630 Taastrup (DK)
(74) Representative: Chas. Hude A/S

(57) **Abstract**

The present invention relates to a system and method of assisting a paving vehicle e.g. an asphalt paver or the operator of such vehicle to improve a paving job performed by said vehicle. The steps performed comprises
- receiving job data relating to the paving job,
- receiving paving best practices data relating to any paving job,
- processing the job data and the paving best practices data according to an algorithm and based thereon, generating feedback data for improving the paving job,
- assisting said paving vehicle or said operator of said vehicle by making said generated feedback data available.

Thereby, improved paving jobs can be performed.

## Description

### FIELD OF THE INVENTION

The invention relates to a method or system for assisting a paving vehicle e.g. an asphalt paver or the operator of such vehicle to improve a paving job performed by said vehicle.

### BACKGROUND OF THE INVENTION

When constructing paving layers on a road surface, this is done by using a paving vehicle, e.g. an asphalt paver. It is important to obtain an asphalt layer having good properties. Such properties include: a smooth surface (to provide good driving experience for cars driving on the surface), a highly compacted robust paving layer which is durable through years of wear from traffic and changing weather conditions.

In order to ensure that all these properties are obtained, it is important to ensure that the paving process or paving job is controlled in an exact manner including the control of layer width, layer thickness, operating mode of the laying tools on the paving vehicle and also the temperature and compositions of the paving material. Further, also the laying process itself, such as speed and number of stops during a laying process, can influence the quality. Not only the operation of the laying vehicle may influence the laying process and thereby the quality of the added layer, but also external parameters influence the quality. A paving process should e.g. be performed in a different manner in a cold and windy environment and a warm and calm environment respectively, to obtain a similar paving job quality.

It is known to measure data locally during a paving process. A range of different input sensors mounted on the asphalt paver do this. Such data is measured to keep track of material consumption to document how many kg have been put down per m² paved or by registering instances of stop, start and loading to document the paving work flow. Further data, which that is measured, is paving speed, paved distance and material temperature. It is also known that all such measured data can be tracked with exact time and location coordinates and can then be used for data processing and analysis e.g. to deliver a printed report of key data to validate that road specifications of a particular road paving job on a particular stretch of road have been met.

It is the aim of the current invention to find a way of improving the paving process ensuring that the quality of the paving layer is improved.

### SUMMARY OF THE INVENTION

An improved way of paving is obtained by the invention defined in the claims.

Throughout this document, the words paving job and paving process are used covering the same meaning.

Throughout this document, when a data transfer is described, then it is to be understood that this could be either via wires or wireless using a wireless communication network such as a public or private communication network.

In this description, data measurement devices, data collection units and a central server for handling the data for generating feedback are described. The geographic position of these elements is not important. It is only relevant that data is measured and centrally collected for processing and generating a feedback.

### SHORT LIST OF THE DRAWINGS

In the following, example embodiments are described according to the invention, where
Fig. 1 illustrates job data collected from a paving vehicle,
Fig. 2 illustrates collected external job data,
Fig. 3 illustrates paving best practice data used for improving the result of a paving job,
Fig. 4 illustrates a system for assisting a paving vehicle,
Fig. 5 illustrates a method for assisting a paving vehicle,

### DETAILED DESCRIPTION OF DRAWINGS

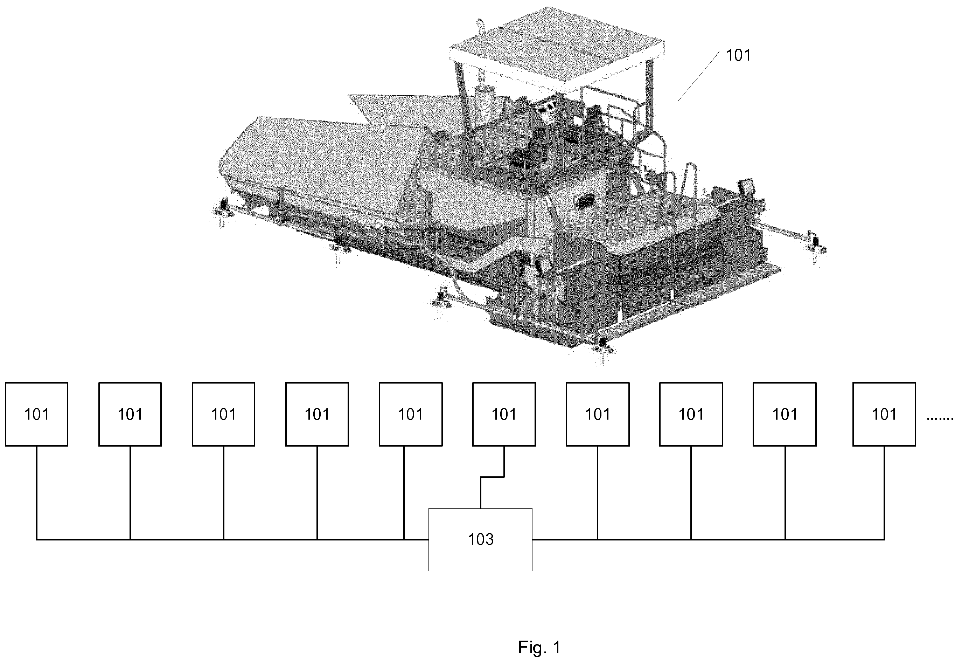

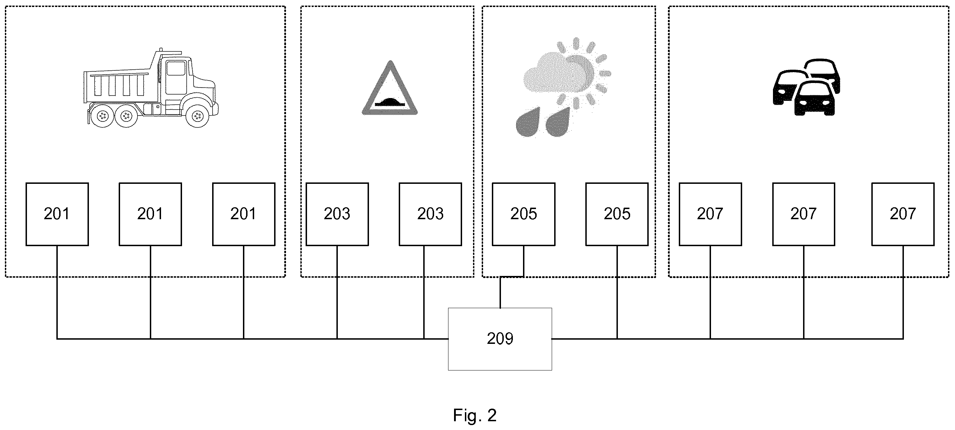

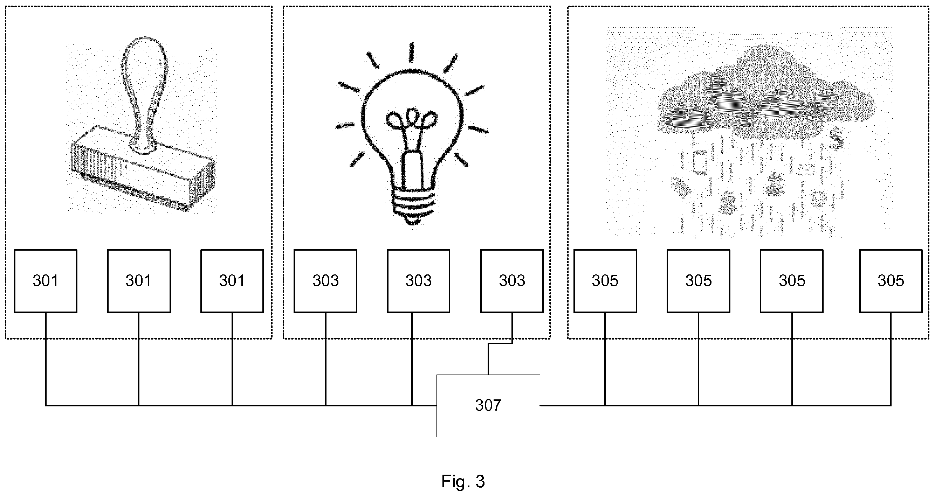

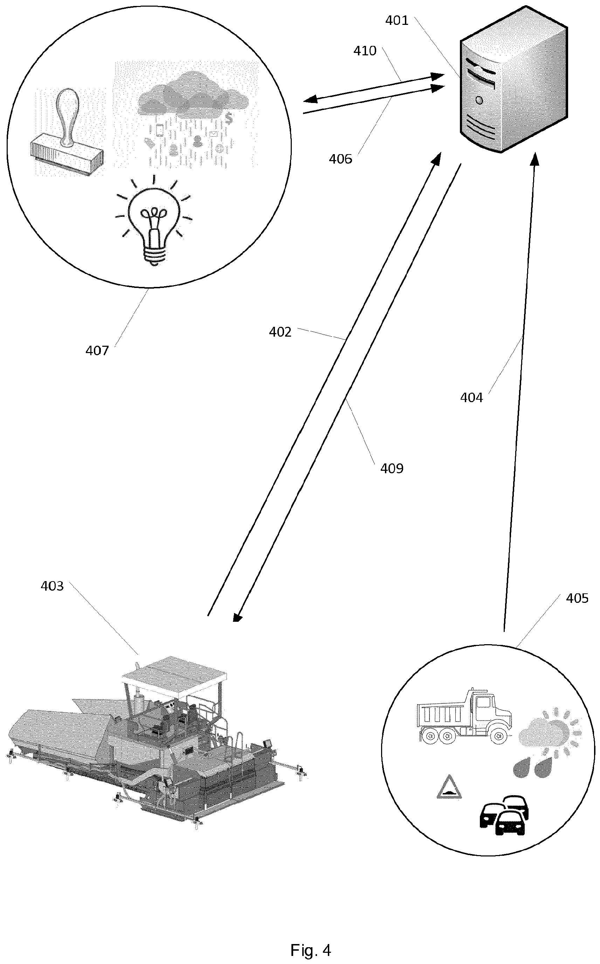

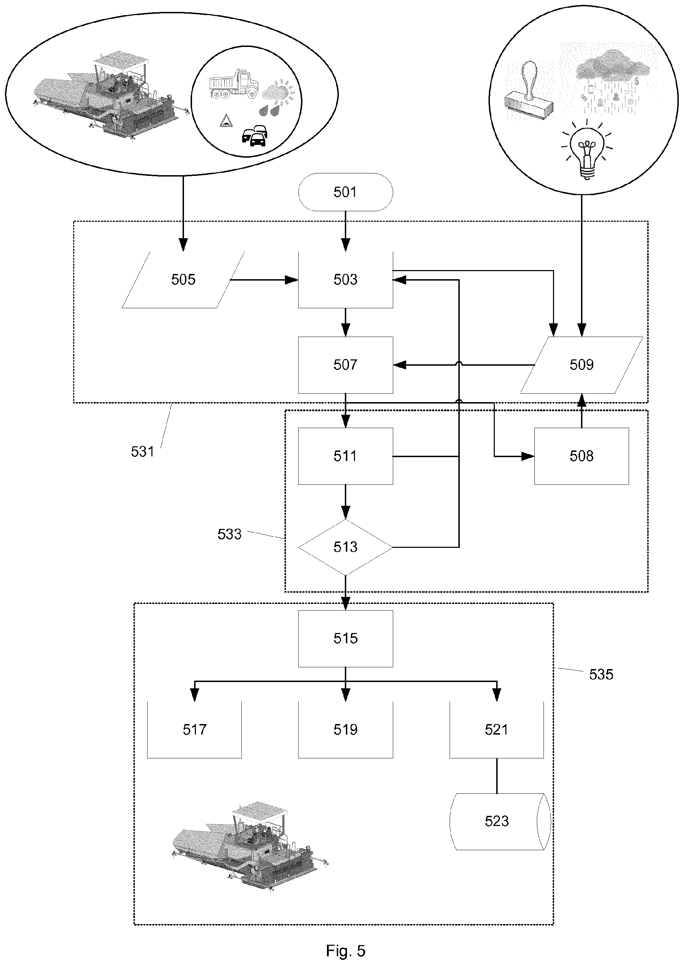

The method of the present invention relates to the following steps and similarly, the system comprises elements for performing the following steps:
1. Collecting job data being data-specific for the paving job either being performed or to be performed, and such job data could either be related to the operating status of the paving vehicle (Fig. 1) or locally measured material or surface properties, or the data could be external job data influencing the result of the current paving job (Fig. 2).
2. The collected data is then analysed (Fig. 4 and Fig. 5) e.g. by comparing the data to paving best practice data (Fig. 3).
3. Based on the analysis as described above, a feedback is generated (Figs. 4 and 5) relating to the specific paving job,
4. The feedback is made available to the paving vehicle used in the paving job or the operator of the paving vehicle with the purpose of improving the paving job.

The collected job data could be both data measured at the paving vehicle relating to the operating status of the paving vehicle and/or the paving material properties, and it could also be data describing external job parameters measured away from the paving vehicle but still influencing the current paving job.

In Fig. ,1 a paving vehicle 100 is illustrated. The vehicle comprises a data collection unit 103 connected to a number of measurement devices 101, where each measurement device is adapted to measure a specific type of job data for measuring the operating status of the vehicle or parameters relating to the vicinity of the vehicle such as surface or material properties or properties of the environment. The measurement devices 101 could be set up to communicate the job data to a data collection unit 103. The data collection unit 103 could be positioned locally at the paving vehicle 100 but as an alternative, a data collection unit 103 could also be positioned away from the vehicle 100, whereby at least some of the measurement devices 101 could be adapted to communicate the measured data to the data collection unit positioned away from the paving vehicle. As a specific embodiment, a number of data could be collected and stored locally at a data collection unit 103 positioned at the paving vehicle, whereas other data could be communicated to a central data collection unit 103 positioned away from the paving vehicle 100.

A paving vehicle comprises at least one or more of the following elements, where data could be measured to improve the paving job:
- Paving material storage for storing the material,
- paving material conveyor transporting material from storage to screed,
- auger for distributing material across the screed,
- tamper for compacting the material in front of the screed,
- vibrator for compacting the paved material positioned on the surface,,
- tow points for the screed for adjusting attack angle of the screed.

Examples of job data or paving process data measured at the vehicle by a measurement device 101 either related to the operating status or measuring parameters in the vicinity of the vehicle could be the data described below:

Temperature data (which could influence the paving process either directly or indirectly), such as:
- Temperature of the paving material positioned in the paving vehicle,
- temperature of the paved surface behind the screed,
- temperature of the air surrounding the paving vehicle (local weather temperature),
- temperature of different parts of the paving vehicle such as screed temperature.

A temperature measurement device, e.g. a thermometer element positioned locally at positions where temperature data is to be collected, collects the temperature data.

Vibrator data, such as
- Vibration frequency,
- Vibration intensity.

Vibrator data measurement devices for measuring vibrator data collect the vibrator data.

Tamper data, such as
- Tamper frequency.

Tamper data measurement devices for measuring tamper data collect the tamper data.

Other data, which could be collected by measurement devices at the paving vehicle, could be:
- Material flow, e.g. measured as conveying activity, i.e. by an conveyor sensor,
- material level in front of the screed measured at the auger, i.e. by an auger sensor,
- paving speed describing how fast the paving layer is being applied to the surface, e.g. by a speed measuring device,
- truck docking by a proximity sensor at the front of the paving vehicle,
- time, position and orientation of the paving vehicle, e.g. by means of GNSS system,
- data about mechanical parts on the paving vehicle, such as auger position, side plate position, crown position, hopper flaps position, tow point position, e.g. by electromechanical linear or angular sensors, transducers or encoders.

All the measurement devices 101 at the paving vehicle could be connected directly or indirectly to a local data collection unit 103 comprising a data storage and also a data processing unit controlling the data collection process (such as collection frequency) and maybe also for converting collected data into a predefined format. After collection, the data stored in the data storage of the local collection unit could be transferred to a central data collection device, and this transfer could be done via wireless communication e.g. using the telecommunication network, or it could be done by using a memory device (e.g. a memory stick).

Paving job data could also be collected relating to external job data which could e.g. somehow influence the paving job performed by the paving vehicle.

Fig. 2 illustrates collected external job data, where a data collection unit 209 is communicatively connected to a number of data providers in the form of data services or measurement devices 201, 203, 205, 207, where each data provider is adapted to provide a specific type of external job data.

The data provider 201, 203, 205, 207 could be set up to communicate the data to a data collection unit 209. The data collection unit 209 could be positioned locally at the paving vehicle, but as an alternative the data collection unit 209 could also be positioned away from the vehicle, whereby at least some of the data providers 201, 203, 205, 207 could be adapted to communicate the provided data to the data collection unit positioned away from the paving vehicle. As an embodiment, some data could be collected and stored locally at a data collection unit 209 positioned at the paving vehicle, whereas other data could be communicated to a central data collection unit 209 positioned away from the paving vehicle.

Examples of job data or paving process data measured away from the paving vehicle could be the data listed below:
Truck data 201 relating to the truck delivering paving material to the paving vehicle, such as truck position, could be data describing the truck load (such as temperature or amount of paving material on the truck) and truck speed. The truck could be equipped with measurement units for measuring the data and then communicating the data. The data could be communicated directly to the central data collection unit, where the data is linked to other data relating to a specific paving job or could be communicated to the local data collection unit and stored together with other data relating to the specific paving job.

Other external data could be:
- Weather forecast data 205,
- traffic data 207,
- road condition data 203, e.g. profilograph data.

The external data 201, 203, 205, 207 is measured by measurement units or provided by data services and then communicated either directly to the central data collection unit, where the data is linked to other data relating to a specific paving job, or the data is communicated to the local data collection unit and stored together with other data relating to the specific paving job. Later, all data could then be transferred to the central data collection unit as described above.

A further example of job data could be test results, where features of an already applied paving layer is measured, and such features could be measured by performing an analysis of the profilograph of the applied layer, an analysis of test drills in the applied layer or by density gauge measurements.

In the above, examples have been given on different types of job data, being data specific for the paving job either being performed or to be performed. This data could e.g. either be related to the operating status of the paving vehicle (Fig. 1), data relating to the paving material, data relating to the surroundings of the paving vehicle, external data influencing the result of the current paving job (Fig. 2) or quality measures of the applied paving layer.

According to the present invention, at least some of the data is then to be analysed and in some manner compared or processed with respect to paving best practice data for providing feedback data.

Fig. 3 illustrates paving best practice data which can be used and combined with job data for generating a feedback.

A data collection unit 307 is connected to a number of data collection devices 301, 303, 305, where each data collection device collects a specific type of paving best practice data. The data collection unit 307 could be positioned locally at the paving vehicle but as an alternative, the data collection unit 307 could also be positioned away from the vehicle, whereby at least some of the data collection devices 301, 303, 305 could be adapted to communicate the measured data to the data collection unit positioned away from the paving vehicle. As an embodiment, some data could be collected and stored locally at a data collection unit 307 positioned at the paving vehicle, whereas other data could be communicated to a central data collection unit 307 positioned away from the paving vehicle.

The collection units could collect data relating to either known process standards 301, existing paving knowledge 303 or data from other paving jobs performed globally and possible data related to learnings from these 305 (Big data)

Data relating to known process standards 301 could relate to predefined paving criteria/standards that the paving job should live up to, and this could be criteria such as:
- Acceptable number of stops/distance,
- acceptable length of stops,
- acceptable temperature of material,
- minimum/maximum paving speed,
- mat width.

Such standard could have been defined by local regulations, customer demands/designs or they could be defined as the paving companies best practices. In specific, embodiment standards are defined individually per paving job.

Data relating to existing paving knowledge 303 could relate to experience from other paving jobs both obtained by using the specific paving vehicle, but also by experience from using similar vehicles globally or from paving jobs in similar conditions. The best practice data could be globally collected paving knowledge and could e.g. relate to experience as follows:
- Short stops result in bumps in paved mat,
- longer stops result in material cooling,
- cooler material means that material is more difficult to compact,
- wet conditions mean poor quality mat,
- relations between tamper/vibrator/paving speed parameters and quality of paving mat.

Big data and data relating to an analysis of big data 305 (globally collected data regarding paving jobs) and examples of such analysis could be performed as e.g.:
- Deep Learning (AI)
- Neural Networks
- Statistical analysis
- Trend analysis
- Pattern recognition

Every time new data is added (from e.g. 103, 209 and 307) to big data collections, the data could be analysed to find new correlations or patterns in the data. The resulting data collected by 305 includes therefore improved understanding of best practice and improved algorithms.

Figure 4 illustrates a system for improving a paving job according to the present invention combining job data and paving best practice data for generating a feedback and making it available for improving the paving job. The system comprises a central server unit 401 for processing collected data, and the central server 401 receives input 402 from measurement devices 101 (Fig. 1) measuring data relating to the operation of the paving vehicle 403. The central server 401 also receives input 404 from measurement devices 201, 203, 205, 207 (Fig. 2) adapted to measure a specific type of external job data 405. Further, the central server also receives input 406 from data collection devices 301, 303, 305 (Fig. 3) collecting paving best practice data 407. The data from the measurement devices and the data collection devices could also be transmitted indirectly via the data collection units 103, 209, 307.

The central server unit comprises a processing unit, means for receiving and transmitting data and also means for storing data.

The central server unit 401 processes this data 401 e.g. by analysing the collected data received via 402 and 404 and comparing them to the best practice paving data received via 406. Based on the analysis as described above, a feedback 409 is generated relating to the specific paving job with the purpose of improving the paving job.

Further, the central server unit 401 could process this data 401 e.g. by Big data analysis to generate possible new relations between data 402, 404 and/or 406. These new relations 410 could e.g. become part of data 305 in paving best practice data 407.

In Fig. 5, the method of assisting the paving vehicle is illustrated. The method comprises a data collection process 531, a data analysis process 533 and a feedback process 535.

In 501, a paving job is initiated and then the data collection process 531 is started, where paving vehicle data and external paving job specific data 505 is obtained in 503, and in 507 the paving best practice data 509 is obtained. In an embodiment, the job specific data is constantly read during the paving process, whereas the paving best practice data could be read once prior to the beginning of a paving job and according to specifics of the paving job to be performed. Alternatively, the paving best practice data could also be read based on the job specific details. E.g. if the conditions are cold and windy, the paving best practice data relating to cold and windy conditions are read.

As part of the data collection 503, paving vehicle data and external paving job specific data 505 is added to the paving best practice data 509 as globally collected paving job data 305.

In 508, data is processed for finding new possible learnings, e.g. by updating neural networks weights e.g. through a recursive training session with the new paving vehicle data and external paving job specific data 505.

In 511, the data is analysed and it is determined whether feedback data should be generated to improve the paving job. If feedback data is generated in 513, then the process moves on to the feedback process 535 and if not, the process returns back to the data collection process. The analysis in 511 could e.g. be an evaluation of a neural network from best practice data 509 trained in 508. Alternatively, the analysis in 511 could also e.g. be a simple test of measured data from 505 against allowed values in standards from 509.

The analysis as described above could e.g. be performed according to the following, potentially resulting in feedback which could improve the paving process:
- Processing of current paving job process data 505 through AI/Neural networks based on general paving data 509,
- evaluation of current paving job process data 505 through fuzzy rulesets based on general paving data 509,
- making recommendation from algorithms based on general paving data 509,
- direct evaluation of process data 505 against standard algorithms (paving best practice data 509) for best paving practices developed from existing paving knowledge,
- Direct evaluation of process data 505 against algorithms (general paving data 509) for best paving practices defined by standards defined by local regulations, customer demands/design or paving company best practices.

In 515, it is determined if the generated feedback should be made available to the operator as instructions and/or converted to a control signal and/or stored at a recommendation database as recommendation data for future operations.

If the feedback data is to be made available as operator instructions, then the feedback data is converted in 517 to operating instructions and communicated to the operator of the paving vehicle.

Operator instructions could e.g. be recommendations/instructions to the operator of the paving vehicle improving the current paving job such as:
- Slow down the paving speed to match next truck with paving material,
- lower the paving material level in front of the screed,
- adjust screed temperature,
- Send recommendations for compactor driving pattern and/or location.

This feedback could e.g. be given to the operator via a screen positioned on the paving vehicle.

If the feedback data is to be converted to a control signal controlling the paving vehicle, then the feedback data is converted in 519 to control data and provided as control data to the paving vehicle for controlling said paving vehicle.

The control signal could e.g. control the vehicle to
- adjust paver speed up/down,
- adjust auger speed,
- adjust vibrator / tamper parameters,
- adjust position of such mechanical parts of the paving vehicle, such as side plates, hopper flaps or tow points.

The control signal is sent directly or indirectly to the control system of the paving vehicle.

If the feedback data is to be stored as recommendation data, then recommendation data is generated in 521 based on said feedback data and stored at a recommendation database 523 at least being accessible by the operator.

Thereby, the recommendation database comprises recommendations for future jobs such as:
- Use more trucks so lengthy stops are avoided,
- pave more slowly to match flow of trucks,
- material levels being high - could result in temperature segregation,
- compaction may be affected by process settings,
- use different levelling sensor setup for this type of job,
- train vehicle operators in using leveling system,
- rrain operators in material management.

## Claims

1. A method of assisting a paving vehicle e.g. an asphalt paver or the operator of such vehicle to improve a paving job performed by said vehicle, wherein said method comprises
- receiving job data relating to said paving job,
- receiving paving best practices data,
- processing said job data and said paving best practices data according to an algorithm and based on said processing generating feedback data for improving said paving job,
- assisting said paving vehicle or said operator of said vehicle by making said generated feedback data available.

2. A method according to claim 1, wherein said paving best practices data comprises data relating to defined paving requirements, and wherein said algorithm involves processing said job data and said defined paving requirements to generate feedback data.

3. A method according to claim 2, wherein said defined paving requirements are generated from an analysis of previous collected job data from paving vehicles, and wherein said algorithm involves processing of said job data and said previous collected job data to generate feedback data.

4. A method according to claim 2, wherein said defined paving requirements are predefined based on existing paving knowledge or known process standards, and wherein said algorithm involves processing of said job data and said existing paving knowledge or known process standards.

5. A method according to claims 1-4, wherein said feedback data is made available by converting the data to operator instructions and communicating said instructions to said operator during said paving job.

6. A method according to claims 1-5, wherein said feedback data is made available by converting the data to paving vehicle control data and is provided as control data to said paving vehicle for controlling said paving vehicle.

7. A method according to claims 1-6, wherein said feedback data is made available by generating paving job recommendation data to be stored at a recommendation database at least being accessible by said operator.

8. A method according to claims 1-7, wherein said job data contains paving process data identifying the current operating status of the paving vehicle.

9. A method according to claims 1-8, wherein said job data comprises external paving process data identifying external factors influencing the paving job.

10. A method according to claims 1-9, wherein said job data contains paving process data identifying the quality of the paving layer resulting from the paving job performed by said vehicle.

11. A system for assisting a paving vehicle e.g. an asphalt paver or the operator of such vehicle to improve a paving job performed by said vehicle, wherein said system comprises
- receiving means for receiving job data relating to said paving job,
- receiving means for receiving paving best practices data,
- processing means for processing said job data and said paving best practices data according to an algorithm and based on said processing generating feedback data for improving said paving job.
- means for assisting said paving vehicle or said operator of said vehicle by making said generated feedback data available.
